# EUROPÄISCHE PATENTANMELDUNG

(11) **EP 1 046 789 A1**
(43) Veröffentlichungstag der Anmeldung: **25.10.2000**
(21) Anmeldenummer: 99810339.4
(22) Anmeldetag: 22.04.1999
(51) Int. Cl.: F01D 25/28, F16M 7/00

(54) **Lagerblock für eine Dampfturbine und Verfahren zur Montage desselben**

(71) Anmelder: Asea Brown Boveri AG, 5401 Baden (CH)
(72) Erfinder: Graf, Peter, 79790 Küssaberg (DE); Jarnevic', Drazen, 47250 Duga Resa (HR); Meylan, Pierre, 2532 Magglingen (CH)
(74) Vertreter: Pöpper, Evamaria, Dr.

(57) **Zusammenfassung**

Eine Turbine eines Dampfkraftwerkes wird auf einem Lagerblock (1) gelagert, welcher aus einer Grundtragstruktur (2) und einer Lagertragstruktur (3) besteht. Die Grundtragstruktur (2) enthält alle notwendigen Versorgungsleitungen, insbesondere die Ölleitungen (4). Sie wird auf dem Betonfundament mit Füssen (5) aufgesetzt und mit Beton ausgefüllt und erhält dadurch die notwendige Masse, Festigkeit und Steifigkeit.

## Beschreibung

### TECHNISCHES GEBIET

Die Erfindung bezieht sich auf einen Lagerblock einer Turbine eines Dampfkraftwerkes und auf ein Verfahren zur Montage desselben.

### STAND DER TECHNIK

In Dampfkraftwerken werden die Turbinen (Hochdruck-, Mitteldruck- oder Niederdruckteile einzeln oder bei Kombimaschinen) auf Lagerblöcken gelagert. Eine solche Turbinenlagerung ist beispielsweise aus der Druckschrift EP 751 283 A2 bekannt. In ein Betonfundament ist ein Aussengehäuse einer Dampfturbine eingelassen. Das Aussengehäuse besteht aus einem Ober- und einem Unterteil. Dabei sind sowohl das Unterteil des Aussengehäuses als auch die Lagerstellen des Turbinenrotors im Betonfundament festgelegt. Das Oberteil ist als Montagehaube ausgestaltet. Es kann abgenommen werden, um Zugang zu Lagerschalen und anderen mechanischen Einrichtungen zu ermöglichen. Ein solches Gehäuse einer Niederdruckturbine ist auch aus der Druckschrift EP 575 642 A1 bekannt. Das im Betonfundament eingelassene Lagergehäuse ist mit ihm verschraubt oder beispielsweise mit Rippen verbunden. Eine solche Lagerung offenbart auch das amerikanische Patent US 5 094 588. Die Ölversorgungsleitungen werden bei diesen Lagerungen an die Lagerblöcke meist angeflanscht. Dabei sind die Druckleitungen bis zum Einlass im Fundament üblicherweise doppelwandig ausgeführt, um zu verhindern, dass sich Öl bei Leckagen nicht auf den Boden des Gehäuses zu heissen Turbinenteilen hin ausbreitet. Diese Art der Lagerblöcke hat aber den Nachteil, dass sie durch die Konstruktion des Aussengehäuses aus Guss verhältnismässig schwer und teuer ist.

### DARSTELLUNG DER ERFINDUNG

Die Erfindung löst die Aufgabe, einen Lagerblock einer Turbine, welcher sich durch eine einfache Bauweise auszeichnet, zu konstruieren und ein Verfahren zur Montage dieses Lagerblocks zu schaffen. Dadurch sollen zum einen die Kosten minimiert, zum anderen das Gewicht eines Lagerblocks reduziert werden. Dies soll insbesondere dadurch erreicht werden, dass die Komplexität eines Lagerblockes verringert wird und die Integration in das Betonfundament stark vereinfacht wird.
Erfindungsgemäss wird die Aufgabe bei einem Lagerblock gemäss dem Oberbegriff des Anspruchs 1 dadurch gelöst, dass der Lagerblock aus einer Grundtragstruktur besteht, welche auf dem Betonfundament aufgesetzt ist und an ihm befestigt ist und einer Lagertragstruktur, welcher auf der Grundtragstruktur befestigt ist.
Vorteilhaft kann die vorgefertigte Grundtragstruktur einfach am Betonfundament befestigt werden, justiert und danach mit Beton gefüllt werden. Die ebenfalls vorgefertigte Lagertragstruktur kann wahlweise mit der Turbine oder mit einer geeigneten Messmethode justiert werden. Eine Vorfertigung der beiden Teile ist vorteilhaft möglich. Ein Gewichtsvorteil dieses Lagerblockes ergibt sich besonders dann, wenn die Grundtragstruktur und die Lagertragstruktur aus verschweissten Stahlblechen bestehen. Ein weiterer Vorteil besteht darin, dass die Ölleitungen in die Grundtragstruktur integriert sind und damit in dem Beton eingegossen sind. Eine doppelwandige Ölleitungsführung entfällt vorteilhaft.

Die weiteren Ausgestaltungsmöglichkeiten sind Gegenstände der abhängigen Ansprüche.

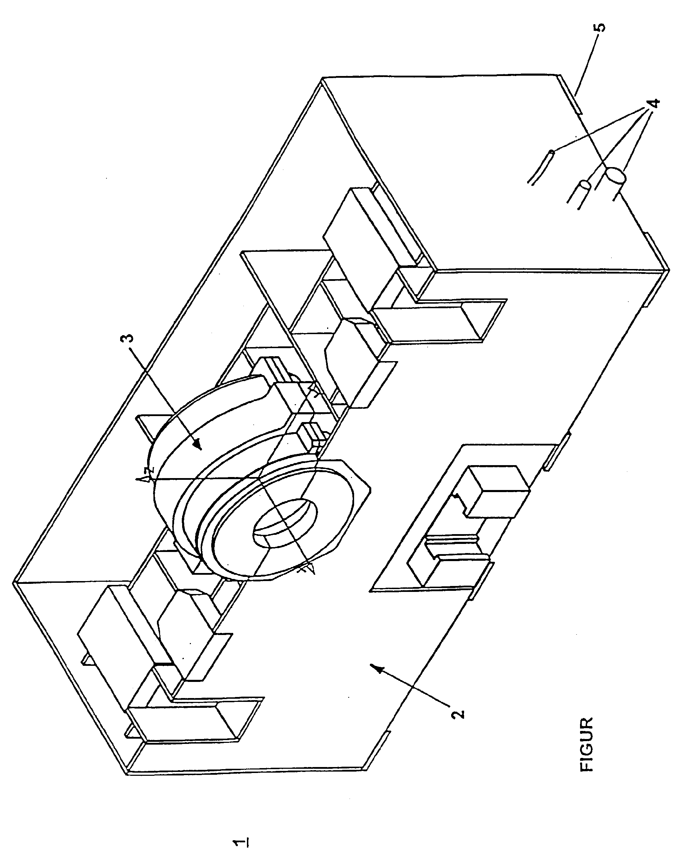

### KURZE BESCHREIBUNG DER ZEICHNUNG

Die einzige Figur zeigt eine Ausführungsform eines erfindungsgemässen Lagerblocks mit Grundtragstruktur und einer Lagertragstruktur aus Stahlblechen.

Es sind nur die für die Erfindung wesentlichen Elemente dargestellt.

### WEG ZUR AUSFÜHRUNG DER ERFINDUNG

Die einzige Figur zeigt eine Ausführungsform eines erfindungsgemässen Lagerblocks 1 einer Turbine in einem Dampfkraftwerk, mit welchem der Rotor der Turbine gelagert wird. Dieser Lagerblock 1 besteht aus einer tragenden Grundstruktur 2 und einer Lagertragstruktur 3. Die Grundtragstruktur 2 ähnelt einer Fachwerkkonstruktion. Sie besteht vorteilhaft aus geschweissten Stahlblechen, beispielsweise aus Baustahl, was einen deutlichen Vorteil bezüglich des Gewichts und der Herstellungskosten gegenüber den Stahlgussgehäusen, welche aus dem Stand der Technik bekannt sind, mit sich bringt. Somit ist es möglich, sie einfach vorzufertigen. Dabei müssen keine besonderen Anforderungen an Genauigkeit und Schweissgüten eingehalten werden. Bei der Fundamentherstellung für die Turbine wird die Grundtragstruktur 2 mit in der Höhe verstellbaren Füssen 5 auf dem Fundament ausgerichtet und auf ihm befestigt. Die für die Lagerung notwendigen Ölleitungen 4 bzw. andere Anschlussleitungen sind in der Grundtragstruktur 2 enthalten, diese sind aber in der einzigen Figur nicht sichtbar, sondern nur schematisch am Rand der Grundtragstruktur 2 dargestellt. Nachdem die Grundtragstruktur 2 positioniert worden ist, wird die Lagertragstruktur 3 auf ihr positioniert, mit den Ölleitungen verbunden und eingeschalt, um die Grundtragstruktur 2 dann mit Beton auszufüllen. Da die Ölleitungen in dem Beton eingegossen werden, entfällt vorteilhaft die doppelwandige Ölleitungsführung. Der Beton bildet die Sicherheit gegen Leckagen.

Der Lagerblock 1 erreicht seine notwendige Masse, Festigkeit und Steifigkeit durch den verwendeten Beton. Vorteilhaft ist, dass die aus Stahlblech hergestellte Lagerstruktur nur ca. 50 % der Kosten im Vergleich mit den herkömmlichen aus Stahlguss bestehenden Konstruktionen aufweist. Wie im Stand der Technik wird mit dieser Lagerungsart von Turbinen weiterhin die Achshöhe eingehalten. Auch kann das Gehäuse auf dem Lagerblock abgestützt werden und die bestehenden Fundamentausschnitte bleiben erhalten.

Der erfindungsgemässe Lagerblock 1 kann auf verschiedene Arten während einer Inbetriebsetzung einer Dampfturbine montiert werden. Um eine optimale Ausrichtung des Turbinenrotors zu erreichen ist es denkbar, die Grundtragstruktur 2 mit der Lagertragstruktur 3 auf den nicht dargestellten Betonfundament auf vorgesehenen Tischarmierungen zu befestigen. Danach kann eine Justierung sowohl der Grundstruktur 2 als auch der Lagertragstruktur 3 während der Turbinenmontage (inbetriebsetzung) erfolgen. Ist die Justierung abgeschlossen, kann danach die Grundtragstruktur 2 mit Beton ausgegossen werden.

Um die Positionierung des Lagerblocks 1 unabhängig von der Lieferung der Einzelturbinen und bzw. der Rotoren vornehmen zu können ist es aber auch denkbar, eine Justierung mit anderen, geeigneten Messmethoden vorzunehmen. Dabei können beispielsweise optische oder mechanische Messmethoden, Laser oder ein Hilfsrotor, eingesetzt werden. Nach dieser Justierung wird die Grundtragstruktur 2 mit Beton ausgegossen. Die Einzelturbine mit Rotor wird danach in die Lagertragstruktur 3 eingebaut und mittels der Lagerung innerhalb dieser Lagertragstruktur 3 in seiner endgültigen Lage fein (d.h. um maximal einen Millimeter) justiert. Durch die genannten Verfahren ist eine Montage vereinfacht möglich, insbesondere weil der Lagerblock 1 lokal vorgefertigt werden kann und weil eine Montage auch unabhängig von Einzelturbinen und Rotoren erfolgen kann.

### BEZUGSZEICHENLISTE

- **1**: Lagerblock
- **2**: Grundtragstruktur
- **3**: Lagertragstruktur
- **4**: Ölleitungen
- **5**: Füsse

## Patentansprüche

1. Lagerblock (1) zur Lagerung eines Traglagers einer Turbine in einem Dampfkraftwerk auf einem Betonfundament,
dadurch gekennzeichnet, dass
der Lagerblock (1) aus einer Grundtragstruktur (2) besteht, welche auf dem Betonfundament aufgesetzt ist und an ihm befestigt ist und einer Lagertragstruktur (3), welche auf der Grundtragstruktur (2) befestigt ist.

2. Lagerblock (1) nach Anspruch 1,
dadurch gekennzeichnet, dass
die Grundtragstruktur (2) sämtliche Ölleitungen (4), welche einwandig ausgeführt sind, enthält.

3. Lagerblock (1) nach Anspruch 1,
dadurch gekennzeichnet, dass
der Lagerblock (1) auf Füssen (5) auf dem Betonfundament aufgesetzt und befestigt ist.

4. Lagerblock (1) nach Anspruch 3,
dadurch gekennzeichnet, dass
die Füsse (5) in der Höhe verstellbar sind.

5. Lagerblock (1) nach einem der Ansprüche 1 bis 4,
dadurch gekennzeichnet, dass
sowohl die Grundtragstruktur (2) als auch die Lagertragstruktur (3) aus verschweissten Stahlblechen besteht.

6. Lagerblock (1) nach einem der Ansprüche 1 bis 5,
dadurch gekennzeichnet, dass
die Grundtragstruktur (2) mit Beton ausgegossen ist.

7. Verfahren zur Montage eines Lagerblocks (1) nach einem der Ansprüche 1 bis 6 zur Lagerung eines Traglagers einer Turbine in einem Dampfkraftwerk auf einem Betonfundament,
dadurch gekennzeichnet, dass
der Lagerblock (1) vorfabriziert auf die Baustelle geliefert wird, mit dem Betonfundaments verbunden wird, die Grundtragstruktur (1) und die Lagertragstruktur (3) justiert werden und die Grundtragstruktur (2) mit Beton ausgegossen wird.

8. Verfahren nach Anspruch 7,
dadurch gekennzeichnet, dass
die Grundtragstruktur (2) und die Lagertragstruktur (3) während der Inbetriebsetzung mit der Turbine justiert werden.

9. Verfahren nach Anspruch 7,
dadurch gekennzeichnet, dass
die Grundtragstruktur (2) und die Lagertragstruktur (3) mit geeigneten Methoden justiert werden, wobei die Turbine erst montiert wird, nachdem die Grundtragstruktur (2) mit Beton ausgegossen worden ist und bei der Montage der Turbine eine Feinjustierung innerhalb der Lagertragstruktur (3) erfolgt.
